# EUROPEAN PATENT APPLICATION

(11) **EP 2 332 744 A2**
(43) Date of publication of application: **15.06.2011**
(21) Application number: 10014836.0
(22) Date of filing: 22.11.2010
(51) Int. Cl.: B60C 9/18, B60C 11/00, B60C 9/20

(54) **Pneumatic tire**

(30) Priority: 30.11.2009 JP 2009270934
(71) Applicant: Sumitomo Rubber Industries, Ltd., Kobe-shi, Hyogo-ken (JP)
(72) Inventor: Matsui, Hiroshi, Chuo-ku Kobe-shi Hyogo 651-0072 (JP); He, Chunliang, Chuo-ku Kobe-shi Hyogo 651-0072 (JP)
(74) Representative: Manitz, Finsterwald & Partner GbR

(57) **Abstract**

A pneumatic tire (2) includes a tread (4), a sidewall (6), a bead (8), a carcass (10), a belt (12), a band (14), a reinforcing layer (16), and an inner liner (18). The tread (4) has a shoulder main groove (24). The reinforcing layer (16) is present locally in an axial direction. The reinforcing layer (16) is positioned between the carcass (10) and the belt (12) in a radial direction. The reinforcing layer (16) is positioned on an inside in the radial direction with respect to the shoulder main groove (24). The reinforcing layer (16) is formed by a large number of cords provided in parallel and a topping rubber. The respective cords are extended substantially in the axial direction. A width (Wr) of the reinforcing layer (16) is equal to or higher than 200% of a width (Wg) of the shoulder main groove (24) and is equal to or lower than 500% of the width (Wg) of the shoulder main groove (24).

## Description

This application claims priority on Patent Application No. 2009-270934 filed in JAPAN on November 30, 2009, the entire contents of which are hereby incorporated by reference.

### BACKGROUND OF THE INVENTION

### Field of the Invention

The present invention relates to a pneumatic tire to be attached to a passenger car or the like.

### Description of the Related Art

A tire includes a tread, a sidewall, a bead, a carcass, a belt and the like. The belt is formed by an inner layer and an outer layer. Each of the inner and outer layers is constituted by a large number of cords provided in parallel and a topping rubber. Each of the cords is tilted with respect to an equator plane. The belt contributes to a stiffness of the tire.

The tread has a plurality of main grooves. Each of the main grooves is extended in a circumferential direction. The main groove contributes to a drainage. By the main grooves, a surface of the tread is separated.

In cornering of a vehicle, a centrifugal force acts on the vehicle. On the other hand, in the cornering, a cornering force is generated in the tire. A magnitude of the cornering force depends on a coefficient of friction between the tread and a road surface. The magnitude of the cornering force also depends on a lateral stiffness of the tire. The cornering force is balanced with the centrifugal force. By a great cornering force, it is possible to obtain an excellent handling stability.

There have been made various proposals related to a belt (or a band). For example, Japanese Laid-Open Patent Publication No. 2008-6892 has disclosed a tire including a band between a belt and a tread. The band includes a zone having a high cord density and a zone having a low cord density. The zone having the high cord density is positioned in the vicinity of a main groove.

In cornering, the tread is deformed. By the deformation, a handling stability is damaged. In particular, the tread is greatly deformed in the vicinity of the main groove.

By using a cord having a high stiffness for a belt, it is possible to obtain a tire having a high lateral stiffness. In the tire, a great cornering force can be generated. The tire is excellent in a handling stability. However, the tire has a high rolling resistance and a great weight. The tire hinders a vehicle from taking a low fuel consumption. A cord having a high stiffness also enhances a vertical stiffness of the tire. A tire having a high vertical stiffness takes a poor ride comfort.

### SUMMARY OF THE INVENTION

It is an object of the present invention to provide a pneumatic tire which is excellent in various performances.

A pneumatic tire according to the present invention includes a tread having a main groove extended in a circumferential direction, a pair of sidewalls extended almost inward in a radial direction from an end of the tread respectively, a pair of beads positioned on an almost inside in the radial direction from the sidewalls respectively, a carcass laid between one of the beads and the other bead along an inside of the tread and the sidewalls, a belt positioned between the tread and the carcass in the radial direction, and a reinforcing layer which is present locally in an axial direction and is positioned on an inside of the main groove in the radial direction. The reinforcing layer includes a large number of cords provided in parallel and a topping rubber. The cord is extended substantially in the axial direction.

The cord of the reinforcing layer suppresses a deformation of the tread in the vicinity of the main groove. The reinforcing layer contributes to a handling stability.

It is preferable that an angle of the cord of the reinforcing layer with respect to the circumferential direction should be equal to or greater than 60° and be equal to or smaller than 90°. It is preferable that a width of the reinforcing layer should be equal to or higher than 200% of a width of the main groove and be equal to or lower than 500% of the width of the main groove. It is preferable that the reinforcing layer should be positioned between the carcass and the belt in the radial direction.

The belt may include a large number of cords provided in parallel and a topping rubber. It is preferable that a tensile strength of the cord of the reinforcing layer should be equal to or smaller than a tensile strength of the cord of the belt.

### BRIEF DESCRIPTION OF THE DRAWINGS

Fig. 1 is a conceptual view showing a pneumatic tire according to an embodiment of the present invention,
Fig. 2 is an enlarged sectional view showing a part of the tire in Fig. 1,
Fig. 3 is an exploded perspective view showing a part of the tire in Fig. 1,
Fig. 4 is a plan view showing a reinforcing layer of the tire in Fig. 1,
Fig. 5 is a plan view showing a part of a sheet for the reinforcing layer in Fig. 4, and
Fig. 6 is a plan view showing a part of a ribbon for the reinforcing layer in Fig. 4.

### DESCRIPTION OF THE PREFERRED EMBODIMENTS

The present invention will be described below in detail based on a preferred embodiment with reference to the drawings.

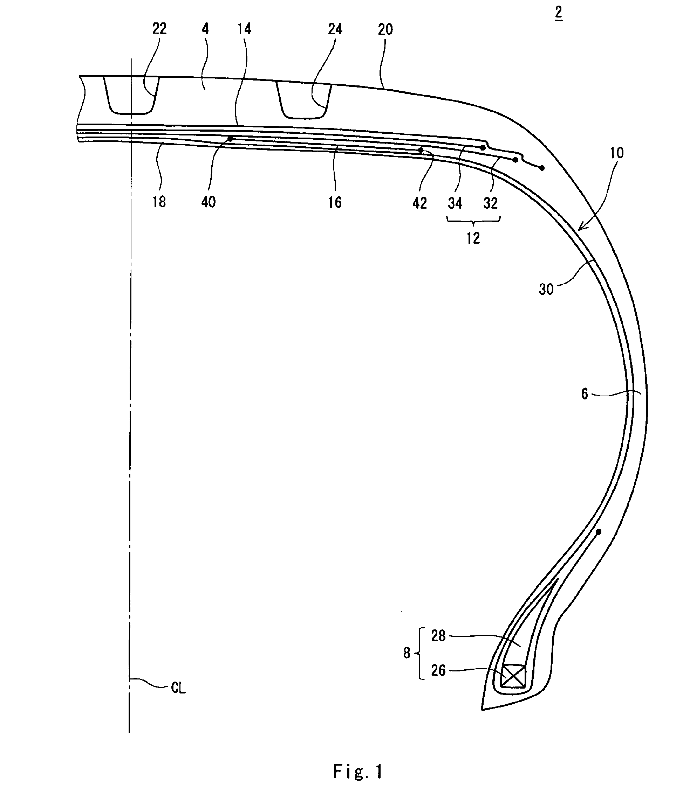

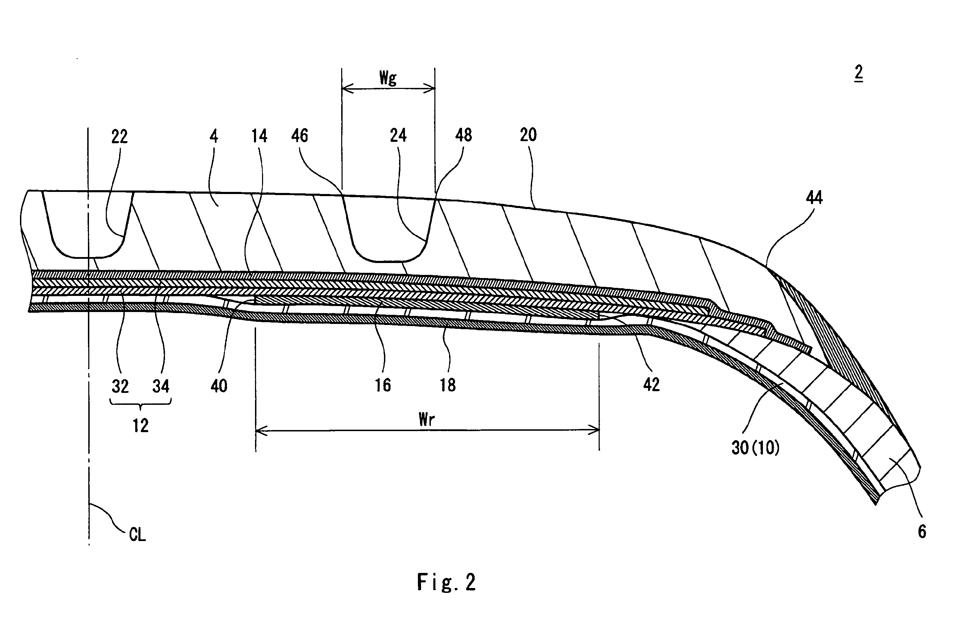

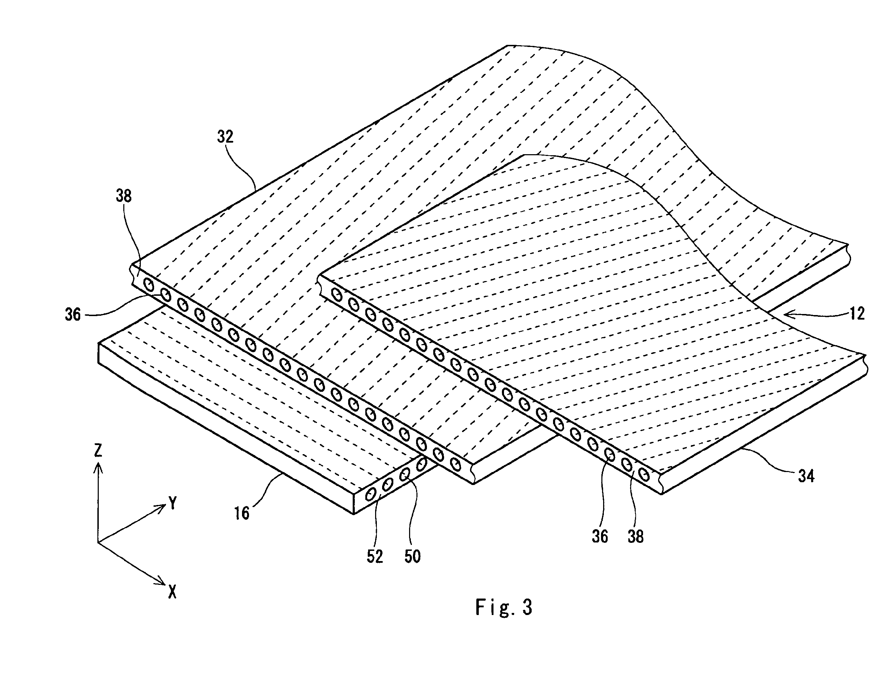

In Figs. 1 and 2, a vertical direction indicates a radial direction of a tire 2, a transverse direction indicates an axial direction of the tire 2, and a perpendicular direction to a paper indicates a circumferential direction of the tire 2. In Fig. 3, the axial direction is shown in an arrow X, the circumferential direction is shown in an arrow Y, and the radial direction is shown in an arrow Z. The tire 2 includes a tread 4, a sidewall 6, a bead 8, a carcass 10, a belt 12, a band 14, a reinforcing layer 16, and an inner liner 18. The tire 2 is of a tubeless type. The tire 2 is attached to a passenger car. The tire 2 takes an almost symmetrical shape with respect to a one-dotted chain line CL in Fig. 1. The one-dotted chain line CL represents an equator plane of the tire 2.

The tread 4 is constituted by a crosslinked rubber which is excellent in an abrasion resistance. The tread 4 takes an outward convex shape in the radial direction. The tread 4 includes a tread surface 20. The tread surface 20 comes in contact with a road surface. The tread 4 includes a crown main groove 22 and a shoulder main groove 24. The crown main groove 22 is positioned on the equator plane CL. The main grooves 22 and 24 contribute to a drainage of the tire 2.

The sidewall 6 is extended almost inward in the radial direction from an end of the tread 4. The sidewall 6 is constituted by a crosslinked rubber. The sidewall 6 absorbs a shock from the road surface by a flexure. Furthermore, the sidewall 6 prevents an external damage of the carcass 10.

The bead 8 is positioned on an almost inside in the radial direction with respect to the sidewall 6. The bead 8 includes a core 26 and an apex 28 extended outward in the radial direction from the core 26. The core 26 is ring-shaped. The core 26 is obtained by winding a non-extensible wire. Typically, a wire formed of steel is used for the core 26. The apex 28 is tapered outward in the radial direction. The apex 28 is constituted by a crosslinked rubber having a high hardness.

The carcass 10 is formed by a carcass ply 30. The carcass ply 30 is laid between the beads 8 on both sides and is provided along an inside of the tread 4 and the sidewall 6. The carcass ply 30 is turned up from an inside toward an outside in the axial direction around the core 26.

The carcass ply 30 is formed by a large number of cords provided in parallel and a topping rubber, which is not shown. An absolute value of an angle formed by each of the cords with respect to the equator plane is usually 70° to 90°. In other words, the carcass 10 has a radial structure. The cord is usually constituted by an organic fiber. Examples of a preferable organic fiber include a polyester fiber, a nylon fiber, a rayon fiber, a polyethylene naphthalate fiber and an aramid fiber. It is also possible to employ a carcass having a bias structure.

The belt 12 is positioned on an outside in the radial direction with respect to the carcass 10. The belt 12 reinforces the carcass 10. The belt 12 is formed by an inner layer 32 and an outer layer 34. As shown in Fig. 3, each of the inner layer 32 and the outer layer 34 is formed by a large number of cords 36 provided in parallel and a topping rubber 38. Each of the cords 36 is tilted with respect to the equator plane. An absolute value of a tilt angle is equal to or greater than 10° and is equal to or smaller than 35°. A tilt direction of the cord 36 of the inner layer 32 is reverse to a tilt direction of the cord 36 of the outer layer 34. A preferable material of the cord 36 is steel. An organic fiber may be used for the cord 36.

The band 14 covers the belt 12. The band 14 is formed by a cord and a topping rubber, which is not shown. The cord is extended substantially in the circumferential direction and is wound spirally. The band 14 has a so-called jointless structure. The belt 12 is restrained by the cord. Therefore, lifting of the belt 12 is suppressed. The cord is usually constituted by an organic fiber. Examples of a preferable organic fiber include a nylon fiber, a polyester fiber, a rayon fiber, a polyethylene naphthalate fiber and an aramid fiber.

Fig. 2 shows the single reinforcing layer 16. As described above, the tire 2 takes the almost symmetrical shape with respect to the one-dotted chain line CL in Fig. 1. Accordingly, the tire 2 has two reinforcing layers 16. An inner end 40 of each of the reinforcing layers 16 does not reach the equator plane CL. An outer end 42 of the reinforcing layer 16 does not reach an end 44 of the tread 4. In other words, the respective reinforcing layers 16 are present locally in the axial direction.

As shown in Fig. 2, the reinforcing layer 16 is positioned between the carcass 10 and the belt 12 in the radial direction. The reinforcing layer 16 is provided on the carcass 10. The belt 12 is provided on the reinforcing layer 16. The reinforcing layer 16 is positioned on an inside in the radial direction with respect to the shoulder main groove 24. An inner edge 46 of the shoulder main groove 24 overlaps with the reinforcing layer 16 in the axial direction. An outer edge 48 of the shoulder main groove 24 also overlaps with the reinforcing layer 16 in the axial direction.

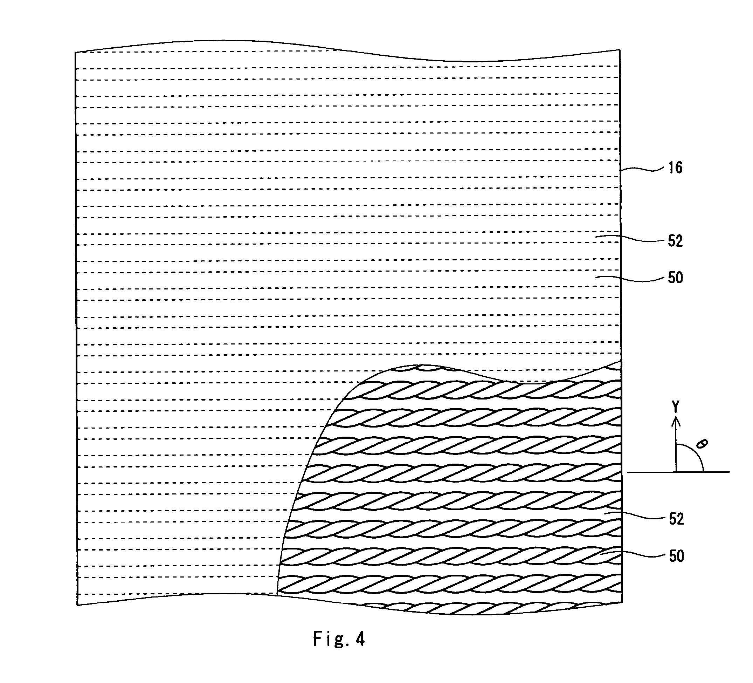

As shown in Figs. 3 and 4, the reinforcing layer 16 is formed by a large number of cords 50 provided in parallel and a topping rubber 52. The respective cords 50 are extended substantially in the axial direction. A material of the cord 50 is steel. An organic fiber may be used for the cord 50. The cord 50 of the reinforcing layer 16 is extended in the axial direction. Therefore, a lateral stiffness of the tire 2 is increased by the cord 50. In cornering, a lateral force is applied to the tire 2. Even if the lateral force is applied to the tire 2, the tread 4 is not deformed considerably. Accordingly, it is possible to obtain an excellent handling stability in the cornering. The cord 50 further inhibits the shoulder main groove 24 from gaping. By inhibiting the gaping, it is possible to suppress a partial wear of the tread 4 and a crack of the shoulder main groove 24.

As described above, the reinforcing layer 16 is present locally. Accordingly, there are the following advantages as compared with the case in which a layer reaching one of ends of the belt 12 from the other end in the axial direction is provided.
(1) A weight of the tire 2 is not increased considerably.
(2) A rolling resistance of the tire 2 is not increased considerably.
(3) A vertical stiffness of the tire 2 is not increased considerably.

The tire 2 contributes to a low fuel consumption of a vehicle. The tire 2 is excellent in a ride comfort. In respect of the low fuel consumption and the ride comfort, it is preferable that the inner end 40 of the reinforcing layer 16 should not reach a portion provided under the crown main groove 22.

In the cornering, a great lateral force is applied to the tread 4 in the vicinity of the shoulder main groove 24. The reinforcing layer 16 is positioned under the shoulder main groove 24. Although the reinforcing layer 16 is present locally, therefore, the deformation of the tread 4 is suppressed sufficiently.

In Fig. 2, an arrow Wr indicates a width of the reinforcing layer 16 and an arrow Wg indicates a width of the shoulder main groove 24. The widths Wr and Wg are measured in the axial direction. In respect of the handling stability, a ratio of the width Wr to the width Wg is preferably equal to or higher than 200% and is particularly preferably equal to or higher than 250%. In respect of a fuel consumption and a ride comfort, the ratio is preferably equal to or lower than 500% and is particularly preferably equal to or lower than 400%.

In respect of the handling stability, the width Wr of the reinforcing layer 16 is preferably equal to or greater than 15 mm and is particularly preferably equal to or greater than 20 mm. In respect of the fuel consumption and the ride comfort, the width Wr is preferably equal to or smaller than 60 mm and is particularly preferably equal to or smaller than 50 mm.

In Fig. 4, an arrow θ indicates an absolute value of an angle of the cord 50 with respect to the circumferential direction Y. In respect of the handling stability, the angle θ is preferably equal to or greater than 60° and is more preferably equal to or greater than 70°, and is particularly preferably equal to or greater than 80°. Ideally, the angle θ is 90°.

In respect of the fuel consumption and the ride comfort, and a suppression in a damage of the cord 36 of the belt 12, a ratio (Tr/Tb) of a tensile strength Tr of the cord 50 of the reinforcing layer 16 to a tensile strength Tb of the cord 36 of the belt 12 is preferably equal to or lower than 1.0, is more preferably equal to or lower than 0.9 and is particularly preferably equal to or lower than 0.8. In respect of the handling stability, it is preferable that the ratio (Tr/Tb) should be equal to or higher than 0.5.

The tensile strengths Tr and Tb are measured by a tension testing machine in accordance with the rule of "Force at Break and Total Elongation at Break" in "Steel Tire Cord Testing Method" of "JIS G 3510". A speed of testing rate of stressing is 5 cm/minute. A maximum load in a stress - strain diagram indicates the tensile strength.

In respect of the handling stability, a density of the cord 50 of the reinforcing layer 16 is preferably equal to or greater than 20 pieces / 5 cm, is more preferably equal to or greater than 25 pieces / 5 cm, and is particularly preferably equal to or greater than 30 pieces / 5 cm. In respect of the fuel consumption and the ride comfort, the density is preferably equal to or smaller than 50 pieces / 5 cm, is more preferably equal to or smaller than 45 pieces / 5 cm, and is particularly preferably equal to or smaller than 40 pieces / 5 cm.

The cord 50 of the reinforcing layer 16 may have a structure of a single wire or a twisted wire. A single twisted cord and a layer twisted cord can be used for the reinforcing layer 16. For a preferable cord structure, "1 X 1", "1 X 2", "1 X 3", "1 X 4", "1 + 2" and "2 + 2" are illustrated.

The cord of the carcass 10 is extended substantially in the axial direction under the tread 4. The cord 50 of the reinforcing layer 16 is also extended substantially in the axial direction. Accordingly, there are a small number of intersecting points of the cord of the carcass 10 and the cord 50 of the reinforcing layer 16. In the tire 2, although the reinforcing layer 16 is provided on the carcass 10, the cord of the carcass 10 is hard to be damaged by the cord 50 of the reinforcing layer 16.

As described above, in the tire 2, the reinforcing layer 16 is positioned:
(A) between the carcass 10 and the belt 12 in the radial direction.

The reinforcing layer 16 may be poisoned:
(B) between the inner liner 18 and the carcass 10 in the radial direction;
(C) between the inner layer 32 of the belt 12 and the outer layer 34 of the belt 12 in the radial direction;
(D) between the belt 12 and the band 14 in the radial direction; or
(E) between the band 14 and the tread 4 in the radial direction.

In respect of no damage of the cord of the band 14 which is caused by the cord 50 of the reinforcing layer 16, (A), (B) and (C) are preferable for the position of the reinforcing layer 16. In respect of an easiness of a manufacture of the tire 2, (A) is particularly preferable for the position of the reinforcing layer 16.

The reinforcing layer 16 is not provided under the shoulder main groove 24 but may be provided under the crown main groove 22. The reinforcing layer 16 provided under the crown main groove 22 suppresses the deformation of the crown main groove 22. The reinforcing layer 16 may be provided under the shoulder main groove 24 and another reinforcing layer 16 may be provided under the crown main groove 22. As described above, in cornering, a great lateral force is applied to the vicinity of the shoulder main groove 24. In respect of the handling stability, the fuel consumption and the ride comfort, it is preferable that the reinforcing layer 16 should be provided under the shoulder main groove 24 and should not be provided under the crown main groove 22.

It is also possible to employ a structure in which the reinforcing layer 16 is provided under the shoulder main groove 24 on an outside of a vehicle and is not provided under the shoulder main groove 24 on an inside of the vehicle. The structure is asymmetrical. In cornering, a great lateral force is applied to the vicinity of the shoulder main groove 24 on the outside. The reinforcing layer 16 positioned under the shoulder main groove 24 on the outside suppresses the deformation of the tread 4. The tire 2 in which the reinforcing layer 16 is not provided under the shoulder main groove 24 on the inside has a small weight. It is particularly effective that the reinforcing layer 16 is not provided under the shoulder main groove 24 on the inside in the tire 2 having an asymmetrical tread pattern.

There is a tire having two crown main grooves and two shoulder main grooves. In the tire, it is preferable that the reinforcing layer 16 should be provided under the shoulder main groove.

There is a tire having a single crown main groove, two shoulder main grooves and two intermediate main grooves. In the tire, it is preferable that the reinforcing layer 16 should be provided under the shoulder main groove. The reinforcing layer 16 may be provided under the intermediate main groove.

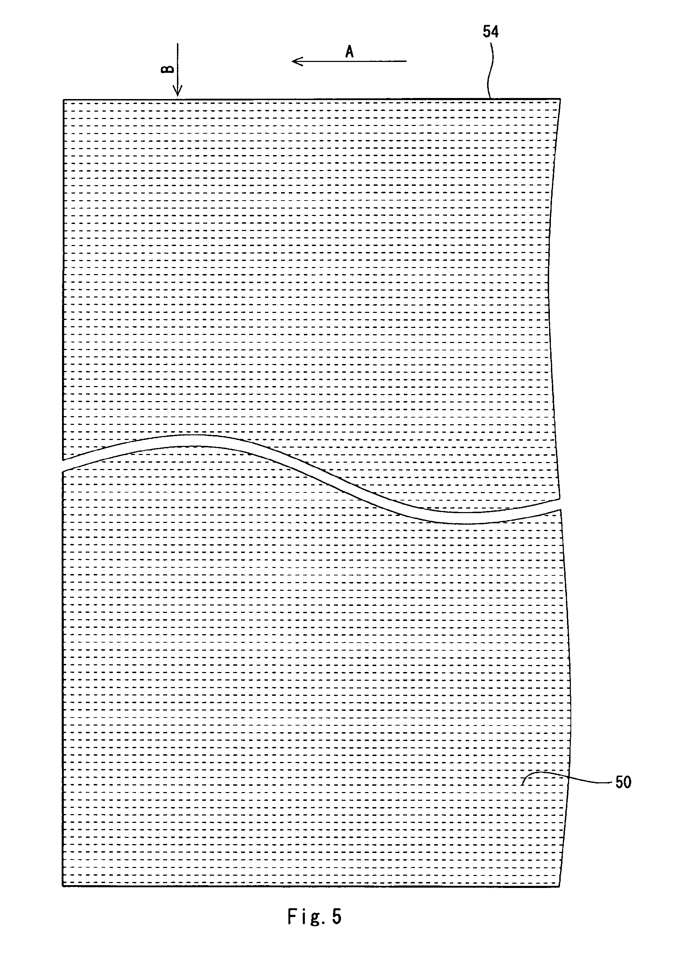

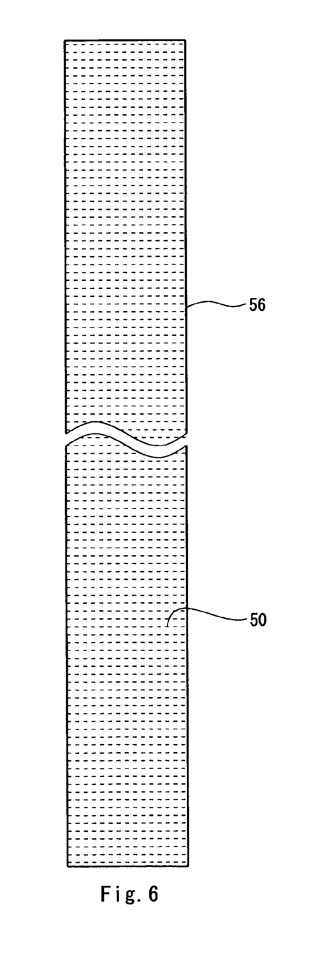

Fig. 5 is a plan view showing a sheet 54 for the reinforcing layer 16 in Fig. 4. The sheet 54 is obtained by providing the extruded topping rubber 52 (see Fig. 4) on the cord 50. In Fig. 5, an arrow A indicates a direction for extruding the topping rubber 52. The cord 50 is extended in the direction shown in the arrow A. The sheet 54 is cut in a position shown in an arrow B. By the cutting, a ribbon 56 shown in Fig. 6 is obtained.

At a preforming step, the carcass ply 30 is wound around a former. The ribbon 56 is wound around the carcass ply 30. Furthermore, another rubber member is assembled into the carcass ply 30 so that a raw cover is obtained. At a vulcanizing step, the raw cover is put into a mold. The raw cover is pressurized and heated in the mold. By the pressurization and heating, a rubber composition flows. By the heating, a crosslinking reaction occurs in the rubber composition. Thus, the tire 2 including the reinforcing layer 16 is obtained.

In the present invention, the dimension and the angle in each member of the tire 2 are measured in a state in which the tire 2 is incorporated in a normal rim and is filled with air to obtain a normal internal pressure. During the measurement, a load is not applied to the tire 2. In this specification, the normal rim implies a rim determined in standards on which the tire 2 depends. A "standard rim" in the JATMA (Japan Automobile Tire Manufacturers Association) standards, a "Design Rim" in the TRA (Tire and Rim Association) standards and a "Measuring Rim" in the ETRTO (European Tire and Rim Technical Organization) standards are included in the normal rim. In this specification, the normal internal pressure implies an internal pressure determined in the standards on which the tire 2 depends. A "maximum air pressure" in the JATMA standards, a "maximum value" described in "TIRE LOAD LIMITS AT VARIOUS COLD INFLATION PRESSURES" in the TRA standards and an "INFLATION PRESSURE" in the ETRTO standards are included in the normal internal pressure. In case of the tire 2 for a passenger car, the dimension and the angle are measured with an internal pressure of 180 kPa.

### EXAMPLES

Although the effects of the present invention will be apparent from examples, the present invention should not be construed to be restrictive based on description of the examples.

### [Example 1]

There was manufactured a tire for a passenger car which has the structure shown in Figs. 1 to 4. The tire has a size of "195/65R15". A specification of the tire is as follows.
Tread
   Width Wg of main groove : 8 mm
Carcass
   Material of cord : nylon
   Fineness of cord : 1670 dtex / 2
   Angle of cord with respect to circumferential direction : 90°
Belt
   Material of cord : steel
   Structure of cord : 2 + 2
   Filament diameter of cord : 0.23 mm
   Angle of cord with respect to circumferential direction : 26°
Band
   Material of cord : nylon
   Fineness of cord : 1400 dtex / 2
   Angle of cord with respect to circumferential direction : approximately 0°
Reinforcing layer
   Material of cord : steel
   Structure of cord : 2 + 2
   Filament diameter of cord : 0.23 mm
   Angle of cord with respect to circumferential direction : 90°
   Width Wr : 25 mm

### [Examples 2 to 8]

A tire according to each of examples 2 to 8 was obtained in the same manner as in the example 1 except that a width Wr was set as shown in the following Table 1.

### [Comparative Example 1]

A tire according to a comparative example 1 was obtained in the same manner as in the example 1 except that a reinforcing layer to overlap with an almost whole surface of a belt was provided. The reinforcing layer is not present locally in an axial direction.

### [Comparative Example 2]

A tire according to a comparative example 2 was obtained in the same manner as in the example 1 except that a reinforcing layer was not provided.

### [Examples 9 to 14]

A tire according to each of examples 9 to 14 was obtained in the same manner as in the example 1 except that a position of a reinforcing layer was set as shown in the following Table 2. Symbols (A) to (E) in the Table 2 have the following meaning:
(A) Between the carcass 10 and the belt 12;
(B) Between the inner liner 18 and the carcass 10;
(C) Between the inner layer 32 of the belt 12 and the outer layer 34 of the belt 12;
(D) Between the belt 12 and the band 14; and
(E) Between the band 14 and the tread 4.

### [Examples 15 to 17 and Comparative Example 3]

A tire according to each of examples 15 to 17 and a comparative example 3 was obtained in the same manner as in the example 1 except that an angle θ of a cord of a reinforcing layer was set as shown in the following Table 3.

### [Examples 18 to 21]

A tire according to each of examples 18 to 21 was obtained in the same manner as in the example 1 except that a density, a structure or a filament diameter of a cord of a reinforcing layer was varied to set a tensile strength Tr as shown in the following Table 3.

### [Weight]

A weight of the tire was measured. The result is shown as an index in the following Tables 1 to 3. A smaller value is more preferable.

### [Cornering Power]

A cornering power was measured by using a flat belt type apparatus on the following measuring condition.
Used rim : 15 X 6 - J (formed of aluminum alloy)
Internal pressure : 220 kPa
Lad : 1.5 kN
Seed : 30 km/h
Camber angle : 0°
Slip angle : 1°
The result is shown as an index in the following Tables 1 to 3. A greater value is more preferable.

### [Rolling Resistance]

A rolling resistance was measured by using a rolling resistance testing machine on the following measuring condition.
Used rim : 15 X 6 - J (formed of aluminum alloy)
Internal pressure : 220 kPa
Lad : 4.6 kN
Seed : 80 km/h
The result is shown as an index in the following Tables 1 to 3. A smaller value is more preferable.

### [Vertical Stiffness and Lateral Stiffness]

A vertical stiffness constant and a lateral stiffness constant in a tire were measured on the following condition.
Used rim : 15 X 6 - J (formed of aluminum alloy)
Internal pressure : 220 kPa
Load : 1.5 kN
The result is shown as an index in the following Tables 1 to 3.

**Table 1 Result of Evaluation**

| | | | Example | Example | Example | Example | Example | Example | Example | Example | Compara. Example | Compara. Example |
|---|---|---|---|---|---|---|---|---|---|---|---|---|
| | | | 2 | 3 | 4 | 1 | 5 | 6 | 7 | 8 | 1 | 2 |
| Position of reinforcing layer | Under shoulder main groove | | (A) | (A) | (A) | (A) | (A) | (A) | (A) | (A) | (A) | - |
| | Under crown main groove | | - | - | - | - | - | - | - | - | | - |
| Width | | Wr (mm) | 10 | 15 | 20 | 25 | 30 | 40 | 50 | 60 | 160 | - |
| Wr/Wg | | (%) | 125 | 188 | 250 | 313 | 375 | 500 | 625 | 750 | 2000 | - |
| *θ* | | (degree) | 90 | 90 | 90 | 90 | 90 | 90 | 90 | 90 | 90 | - |
| Tr/Tb | | | 1.00 | 1.00 | 1.00 | 1.00 | 1.00 | 1.00 | 1.00 | 1.00 | 1.00 | - |
| Weight of tire | | (index) | 102 | 102 | 103 | 104 | 105 | 106 | 108 | 109 | 112 | 100 |
| Cornering power | | (index) | 103 | 103 | 107 | 107 | 108 | 109 | 111 | 112 | 109 | 100 |
| Rolling resistance | | (index) | 99 | 99 | 99 | 99 | 99 | 100 | 103 | 104 | 106 | 100 |
| Vertical stiffness constant | | (index) | 100 | 100 | 100 | 100 | 100 | 101 | 103 | 103 | 105 | 100 |
| Lateral stiffness constant | | (index) | 102 | 102 | 104 | 104 | 104 | 104 | 105 | 105 | 102 | 100 |

**Table 2 Result of Evaluation**

| | | | Example | Example | Example | Example | Example | Example |
|---|---|---|---|---|---|---|---|---|
| | | | 9 | 10 | 11 | 12 | 13 | 14 |
| Position of reinforcing layer | Under shoulder main groove | | (B) | (C) | (D) | (E) | (A) | - |
| | Under crown main groove | | - | - | - | - | (A) | (A) |
| Width | | Wr (mm) | 25 | 25 | 25 | 25 | 25 | 25 |
| Wr/Wg | | (%) | 313 | 313 | 313 | 313 | 313 | 313 |
| θ | | (degree) | 90 | 90 | 90 | 90 | 90 | 90 |
| Tr/Tb | | | 1.00 | 1.00 | 1.00 | 1.00 | 1.00 | 1.00 |
| Weight of tire | | (index) | 104 | 104 | 104 | 104 | 106 | 102 |
| Cornering power | | (index) | 103 | 104 | 106 | 106 | 107 | 102 |
| Rolling resistance | | (index) | 100 | 100 | 99 | 99 | 99 | 99 |
| Vertical stiffness constant | | (index) | 100 | 100 | 100 | 100 | 101 | 100 |
| Lateral stiffness constant | | (index) | 102 | 102 | 103 | 103 | 104 | 102 |

**Table 3 Result of Evaluation**

| | | | Example | Example | Example | Compara. Example | Example | Example | Example | Example |
|---|---|---|---|---|---|---|---|---|---|---|
| | | | 15 | 16 | 17 | 3 | 18 | 19 | 20 | 21 |
| Position of reinforcing layer | Under shoulder main groove | | (A) | (A) | (A) | (A) | (A) | (A) | (A) | (A) |
| | Under crown main groove | | - | - | - | - | - | - | - | - |
| Width | | Wr (mm) | 25 | 25 | 25 | 25 | 25 | 25 | 25 | 25 |
| Wr/Wg | | (%) | 313 | 313 | 313 | 313 | 313 | 313 | 313 | 313 |
| θ | | (degree) | 80 | 70 | 60 | 0 | 90 | 90 | 90 | 90 |
| Tr/Tb | | | 1.00 | 1.00 | 1.00 | 1.00 | 0.9 | 0.8 | 0.5 | 0.4 |
| Weight of tire | | (index) | 104 | 104 | 104 | 104 | 104 | 104 | 104 | 104 |
| Cornering power | | (index) | 106 | 104 | 103 | 100 | 107 | 106 | 106 | 102 |
| Rolling resistance | | (index) | 99 | 99 | 99 | 100 | 99 | 99 | 99 | 99 |
| Vertical stiffness constant | | (index) | 100 | 100 | 100 | 101 | 100 | 100 | 100 | 100 |
| Lateral stiffness constant | | (index) | 103 | 103 | 104 | 105 | 104 | 104 | 104 | 103 |

As shown in the Tables 1 to 3, the tire according to each of the examples is excellent in various performances. From the result of the evaluation, the advantage of the present invention is apparent.

The above description is only illustrative and various changes can be made without departing from the scope of the present invention.

## Claims

1. A pneumatic tire comprising:
a tread having a main groove extended in a circumferential direction;
a pair of sidewalls extended almost inward in a radial direction from an end of the tread respectively;
a pair of beads positioned on an almost inside in the radial direction from the sidewalls respectively;
a carcass laid between one of the beads and the other bead along an inside of the tread and the sidewalls;
a belt positioned between the tread and the carcass in the radial direction; and
a reinforcing layer which is present locally in an axial direction and is positioned on an inside of the main groove in the radial direction,
the reinforcing layer including a large number of cords provided in parallel and a topping rubber, and the cord being extended substantially in the axial direction.

2. The tire according to claim 1, wherein an angle of the cord of the reinforcing layer with respect to the circumferential direction is equal to or greater than 60° and is equal to or smaller than 90°.

3. The tire according to claim 1, wherein a width of the reinforcing layer is equal to or higher than 200% of a width of the main groove and is equal to or lower than 500% of the width of the main groove.

4. The tire according to claim 1, wherein the reinforcing layer is positioned between the carcass and the belt in the radial direction.

5. The tire according to claim 1, wherein the belt includes a large number of cords provided in parallel and a topping rubber, and
a tensile strength of the cord of the reinforcing layer is equal to or smaller than a tensile strength of the cord of the belt.
